Europäisches Patentamt

European Patent Office

Office européen des brevets

(11) Publication number: **0 526 203 B1**

# EUROPEAN PATENT SPECIFICATION

(45) Date of publication of patent specification: **28.06.95**      (51) Int. Cl.6: **B01D  67/00**

(21) Application number: **92306956.1**

(22) Date of filing: **30.07.92**

(54) **Separation membrane.**

(30) Priority: **30.07.91 JP 212623/91**

(43) Date of publication of application:
**03.02.93 Bulletin  93/05**

(45) Publication of the grant of the patent:
**28.06.95 Bulletin  95/26**

(84) Designated Contracting States:
**DE FR GB NL**

(56) References cited:
**WO-A-91/01791**
**FR-A- 2 250 793**
**US-A- 4 346 142**
**US-A- 4 407 846**
**US-A- 4 802 984**

**PATENT ABSTRACTS OF JAPAN vol. 14, no.**
**43 (C-681)26 January 1990**

(73) Proprietor: **Tonen Chemical Corporation**
**1-1, Tsukiji 4-Chome**
**Chuo-Ku**
**Tokyo (JP)**

(72) Inventor: **Yamaguchi, Takeo**
**545 Park Heights Koshigaya, 40-1 Oosato**
**Koshigaya-shi, Saitama-Ken (JP)**
Inventor: **Nakao, Shinichi**
**203,13-14 Akatsuka 4-Chome**
**Itabashi-Ku, Tokyo (JP)**
Inventor: **Kimura, Shoji**
**19-9 Syakujiidai 1-Chome**
**Nerima-Ku, Tokyo (JP)**

(74) Representative: **Calamita, Roberto**
**Frank B. Dehn & Co.**
**Imperial House**
**15-19 Kingsway**
**London WC2B 6UZ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a separation membrane, a process for preparing a separation membrane and a process of separation by using the separation membrane, and more particularly to a separation membrane capable of selectively separating and removing organic compounds such as trihalomethanes, etc. dissolved in water, a process for preparing such a separation membrane, and a process of separation by using such a separation membrane.

The separation of various mixtures by using a membrane having fine pores has been more and more extensively put into practice lately, and is now used in a wide variety of applications. This separation process is applicable not only to solid-liquid mixtures but also to liquid-liquid, gas-gas or gas-liquid mixtures, and the development of separation membranes for various mixtures and processes of separation using such separation membranes is attracting much attention. The separation of organic solvents, etc. by using a membrane is one of the technologies attracting much attention, which is studied to establish a process for separating or concentrating mixtures which cannot be easily separated so far (e.g. mixtures of components having very close boiling points, azeotropic mixtures, mixtures containing materials frail to heat, etc.).

Some organic substances dissolved in water, for instance several organic halides having relatively small carbon numbers such as trihalomethane, etc., are suspected to be harmful to human health and also to be carcinogenic. It has recently been pointed out that some tapped water contains these organic halides. Accordingly, the establishment of a process for completely removing them is desired.

Lately, a pervaporation method is attracting much attention as a process for separating an organic mixture, and an attempt has been made to conduct a pervaporation method with a separation membrane to remove an organic substance dissolved in water. Proposals have been made to provide separation membranes for this process, for instance, an acrylate acrylic acid interpolymer membrane (Yu Hoshi et al., at the 12th annual meeting of the Japan Membrane Society, 1990), a composite, microporous, hollow yarn of modified silicone (Akira Ito et al., at the 22th autumn meeting of the Chemical Engineering Society, 1989), etc. However, sufficient separation selectivity cannot be achieved with these membranes, failing to certainly separate organic compounds such as trihalomethane contained in water in extremely small quantities.

JP-A-3-98632 discloses a separation membrane comprising a microporous polyethylene membrane having fine pores substantially filled with a graft polymer obtained by the graft polymerization of an acrylic monomer. In this separation membrane, methyl acrylate is used as the acrylic monomer, and separation is conducted for various mixtures of organic substances (e.g. benzene and cyclohexane, chloroform and n-hexane, methyl acetate and cyclohexane, acetone and carbon tetrachloride, etc.). However, our research has revealed that since methyl acrylate has a relatively large solubility in water, the resulting graft polymer of methyl acrylate is not suitable for the separation of organic compounds, especially organic halides such as chloroform, etc. dissolved in water.

Accordingly, an object of the present invention is to provide a separation membrane capable of selectively separating and removing organic compounds dissolved in water.

Another object of the present invention is to provide a process for preparing such a separation membrane.

A further object of the present invention is to provide a process for selectively removing organic compounds dissolved in water by using such a separation membrane.

As a result of intense research in view of the above objects, the inventors have come to the conclusion that when a so-called filling-type polymer membrane comprising a microporous membrane of polyethylene, etc. having fine pores filled with a graft polymer obtained by plasma graft polymerization, etc. is used for separating and removing organic compounds such as organic halides contained in water in extremely small quantities, the graft polymer filling the fine pores of the microporous membrane should be water-insoluble and have good affinity for the organic compounds to be separated. They have also found that in order to prepare a separation membrane of a high separation capacity, it is necessary to form a graft polymer substantially uniform in (the fine pores of) the microporous membrane by means of a plasma graft polymerization method. To this end, it is necessary to use a uniform aqueous emulsion of a water-insoluble monomer to be graft-polymerized and to bring it into contact with the microporous membrane having radicals generated by the plasma graft polymerization. By using such a separation membrane, organic compounds can be selectively separated water containing them. The present invention is based upon these findings.

Thus, the separation membrane of the present invention comprises a microporous polyethylene membrane having fine pores substantially filled with a graft polymer obtained by the plasma graft polymerization of a water-insoluble monomer.

The process for preparing a separation membrane according to the present invention comprises:

(a) adding a water-insoluble monomer and a surface-active agent to water to prepare a uniform emulsion of the water-insoluble monomer; and

(b) bringing a microporous polyethylene membrane having radicals formed by plasma irradiation into contact with the emulsion, thereby substantially filling the fine pores of the microporous polyethylene membrane with the resulting graft polymer of the water-insoluble monomer.

The process for separating an organic compound dissolved in water according to the present invention comprises using a separation membrane comprising a microporous polyethylene membrane having fine pores substantially filled with a graft polymer obtained by the plasma graft polymerization of a water-insoluble monomer, the organic compound having affinity for the graft polymer of a water-insolvble monomer, and conducting a pervaporation method, a vapor permeation method or a reverse osmosis method with the separation membrane to selectively separate the organic compound dissolved in water.

**BRIEF DESCRIPTION OF THE DRAWINGS**

Fig. 1 is a partially cross-sectional perspective view schematically showing the steps of the plasma graft polymerization of a water-insoluble monomer onto a microporous polyethylene membrane, (a) showing the microporous polyethylene membrane and (b) showing the microporous polyethylene membrane (separation membrane) having a graft polymer;

Fig. 2 is a graph showing the relation between graft polymerization time and degree of graft polymerization;

Fig. 3 is a graph showing the relation between the amount of a supplied solution and the amount of chloroform in a liquid passed through the separation membrane in the separation test in Examples 1 and 2 and Reference Example 1; and

Fig. 4 is a graph showing the relation between the concentration of chloroform in a supplied solution and the flow (Q) of a liquid passed through the separation membrane in the separation test in Examples 1 and 2 and Reference Example 1.

The present invention will be described in detail below.

[A] Microporous Polyethylene Membrane

The separation membrane of the present invention comprises a microporous polyethylene membrane as a substrate. The microporous polyethylene membrane usable in the present invention may be made of an ultra-high-molecular-weight polyethylene or a high-density polyethylene, and the ultra-high-molecular-weight polyethylene is preferable because of its strength.

A porosity of the microporous polyethylene membrane is preferably from 30% to 95%, and more preferably from 35% to 90%. When the porosity is less than 30%, a permeability of the organic compound to be separated is not sufficient, and when it is over 95%, the membrane has too low a mechanical strength to be used for practical purposes.

Moreover, the average pore diameter is preferably from 0.005 $\mu$m to 1 $\mu$m. When the average pore diameter is less than 0.005 $\mu$m, a permeability of the organic compound to be separated is not sufficient, and the average pore diameter over 1 $\mu$m results in poor separation performance.

Moreover, the microporous polyethylene membrane preferably has a rupture strength of not less than 200 kg/cm$^2$. The rupture strength of not less than 200 kg/cm$^2$ provides the microporous polyethylene membrane with sufficient resistance to deformation due to swelling of the graft polymer formed in the fine pores thereof when absorbing the organic compound.

The thickness of the microporous polyethylene membrane is preferably from 0.1 $\mu$m to 50 $\mu$m, and more preferably from 0.2 $\mu$m to 25 $\mu$m. When the thickness is less than 0.1 $\mu$m, the microporous polyethylene membrane has too low a mechanical strength to be used for practical purposes. On the other hand, the thickness over 50 $\mu$m makes the membrane undesirably thick, resulting in poor permeability.

The ultra-high-molecular-weight polyethylene is a crystalline linear ultra-high-molecular-weight polyethylene consisting of a homopolymer of ethylene or a copolymer of ethylene and 10 mol % or less of an $\alpha$-olefin. Its weight-average molecular weight is not less than $5 \times 10^5$, and preferably from $1 \times 10^6$ to $1 \times 10^7$. The weight-average molecular weight of the ultra-high-molecular-weight polyethylene affects the mechanical strength of the resultant separation membrane.

The ultra high molecular-weight polyethylene having a weight-average molecular weight of less than $5 \times 10^5$ is too thin to be formed into a high-strength separation membrane. Though the highest weight-average

3

molecular weight is not limited, an ultra-high-molecular-weight polyethylene having a weight-average molecular weight of more than 1 x $10^7$ is difficult to be formed into a thin film by stretching.

The ultra-high-molecular-weight polyethylene may be mixed with polyethylene having a relatively low molecular weight. In this case, the resulting polyethylene composition preferably contains not less than 1 % by weight of the ultra-high-molecular-weight polyethylene having a weight-average molecular weight of not less than 7 x $10^5$, such that the resulting polyethylene composition has a ratio (weight-average molecular weight (Mw)/number = average molecular weight (Mn)) of 10-300.

The above Mw/Mn ratio of the polyethylene composition is 10-300, preferably 12-250. When the ratio is less than 10, the average molecular chain length of the polyethylene composition is so long that molecular chains are highly entangled in a solution state, making it difficult to prepare a high-concentration solution. And when the polyethylene composition has an Mw/Mn ratio of more than 300, low-molecular weight components in the polyethylene composition are subject to scission at the time of stretching, thereby reducing the strength of the membrane.

The Mw/Mn ratio is a measure of the molecular weight distribution. The higher the ratio, the wider the molecular weight distribution. In other words, in a composition consisting of polyethylenes having different weight-average molecular weights, the larger Mw/Mn ratio means the larger difference in the weight-average molecular weight of the polyethylenes contained in the composition. The same is true of the small Mw/Mn ratio.

The ultra-high-molecular-weight polyethylene is contained in the polyethylene composition in an amount not less than 1 % by weight based on 100 % by weight of the polyethylene composition. When the content of the ultra-high-molecular-weight polyethylene is less than 1 % by weight, the entanglement of molecular chains of the ultra-high-molecular-weight polyethylene contributing to increase in stretchability is hardly achieved, failing to provide a high-strength microporous membrane. Though the upper limit of the content of the ultra-high-molecular-weight polyethylene is not limited, a high-concentration polyethylene solution cannot be prepared from a polyethylene composition containing more than 90 % by weight of the ultra-high-molecular-weight polyethylene.

Other polyethylene than the ultra-high-molecular-weight polyethylene in the polyethylene composition has a weight-average molecular weight of less than 7 x $10^5$, and the lower limit of the weight-average molecular weight of such polyethylene is preferably not less than 1 x $10^4$. The polyethylene having a weight-average molecular weight of less than 1 x $10^4$ is likely to break by stretching, so that it cannot be formed into the desired microporous membrane. The ultrahigh-molecular-weight polyethylene may preferably be mixed with polyethylene having a weight-average molecular weight of 1 x $10^5$ or more and less than 7 x $10^5$.

Usable as such polyethylene may be the same type as the above-described ultra-high-molecular-weight polyethylene, and high-density polyethylene is particularly preferable.

Without departing from the spirit of the invention, the above-described microporous polyethylene membrane may contain various additives such as antioxidants, ultraviolet absorbers, lubricants, anti-blocking agents, pigments, dies, inorganic fillers etc., if necessary.

[B] Process for Preparing Microporous Ultra-High-Molecular-Weight Polyethylene Membrane

A microporous membrane composed of an ultra-high-molecular-weight polyethylene only may be prepared by the process disclosed in Japanese Patent Laid-Open No. 60-242035.

A microporous membrane made of a polyethylene composition comprising the ultra-high-molecular-weight polyethylene and a relatively-low-molecular-weight polyethylene may be prepared by the process described below.

First, a high-concentration solution of the polyethylene composition is prepared by dissolving the polyethylene composition in a solvent while heating. The solvents usable for this purpose are not restrictive as long as they can dissolve the polyethylene composition sufficiently, and they may be the same as those described in Japanese Patent Laid-Open No. 60-242035. The dissolving of the polyethylene composition in a solvent is conducted while stirring at such a high temperature that the polyethylene composition can be completely dissolved. The heating temperature may vary depending on the types of the polymer and the solvent used, but it is preferably 140-250°C. Also, the concentration of the polyethylene composition solution is 10-50 % by weight, preferably 10-40 % by weight.

Next, the heated solution of the polyethylene composition is extruded through a die of an extruder. The die used for extrusion is preferably a sheet die having a rectangular orifice, and a double-cylinder die, an inflation die, etc. may also be used. In the case of using the sheet die, the die gap is usually 0.1-5 mm and heated at 140-250°C in the process of extrusion. In this case, the extrusion speed is usually from 20-30 cm/min. to 2-3 m/min.

The solution thus extruded through the die orifice is then cooled at a rate of 50°C/min to form a gel-like sheet until its temperature reaches at least a gelation temperature or lower.

The gel-like sheet thus formed is then stretched at a predetermined orientation ratio by a tenter method, a roll method, an inflation method, a rolling method, or a combination thereof, etc. while heating it. Biaxial orientation conducted simultaneously or successively in longitudinal and lateral directions is preferable, and simultaneous biaxial orientation is more preferable.

The orientation temperature is equal to or lower than a melting point of the polyethylene composition + 10°C, and preferably a crystal dispersion temperature or higher, and lower than a crystal melting temperature. Specifically, the orientation temperature is 90-140°C, more preferably 100-130°C.

[C] Separation Membrane

In the separation membrane of the present invention, at least surfaces of the fine pores of the microporous polyethylene membrane are coated with a graft polymer of a water-insoluble monomer, and the graft polymer substantially fill the fine pores. the graft polymerization of the water-insoluble monomer is conducted by a plasma graft polymerization as described below.

The separation membrane of the present invention is for selectively separating organic compounds present in water. For this purpose, the monomer to be grafted should be insoluble in water (not swollen by water, and not permitting water to pass therethrough), but it should have good affinity for organic compounds to be separated. Of course, the monomer is graft-polymerizable. In a case where the substances to be separated are organic compounds, particularly organic halides (for instance, organic halides having 2 or less carbon numbers), monomers having good affinity for organic halides should be selected as the water-insoluble monomers to be graft-polymerized. Specifically, the water-insoluble monomers usable in the present invention include water-insoluble acrylic monomers, methacrylic monomers, styrene monomers, etc. Particularly, water-insoluble acrylic monomers are preferable.

Specific examples of water-insoluble acrylic monomers include ethyl acrylate, butyl acrylate, 2-ethylhexyl acrylate, benzyl acrylate, etc., and specific examples of water-insoluble methacrylic monomers include ethyl methacrylate, butyl methacrylate, 2-ethylhexyl methacrylate, etc. Specific examples of water-insoluble styrene monomers include styrene, $\alpha$-methyl styrene, etc.

The plasma graft polymerization for forming a graft polymer on surfaces of the fine pores of the microporous polyethylene membrane is conducted by irradiating plasma onto the microporous membrane made of ultra-high-molecular-weight polyethylene to form radicals, and bringing the above water-insoluble monomer into contact with the microporous membrane having radicals, so that graft polymerization of the water-insoluble monomer takes place. The plasma graft polymerization may be conducted in a gas phase or a liquid phase, but a liquid phase polymerization is more preferable for graft-polymerizing the water-insoluble monomer.

With radicals formed on the microporous polyethylene membrane, the graft polymerization of the water-insoluble monomer can be conducted such that the graft polymer is formed even in the fine pores of the microporous polyethylene membrane. Incidentally, the graft polymer may be formed on other surface portions of the microporous polyethylene membrane than their fine pores, though its amount should be as small as possible.

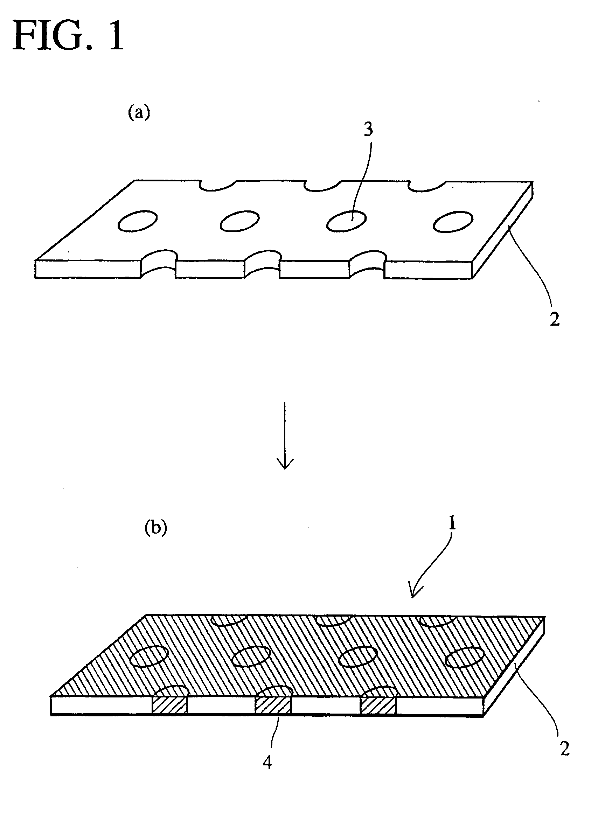

Fig. 1 is a partially cross-sectional perspective view schematically showing the steps of the plasma graft polymerization of a water-insoluble monomer onto a microporous polyethylene membrane 2. As shown in Fig. 1 (a), the microporous polyethylene membrane 2 has a large number of fine pores 3 penetrating the membrane 2. A plasma graft polymerization is conducted on this microporous polyethylene membrane, so that a plurality of monomer molecules are graft-polymerized onto the surface of the microporous polyethylene membrane. The graft polymer 4 is formed not only on the surface of the microporous polyethylene membrane but also on inner surfaces of the fine pores 3. Fig. 1 (b) shows one example of such a microporous polyethylene membrane 2 (separation membrane) having fine pores 3 substantially filled with a graft polymer 4. Incidentally, in this figure, both surfaces of the microporous polyethylene membrane 2 are coated with the graft polymer 4. However, the present invention is not restricted to this embodiment, and either one surface of the microporous polyethylene membrane 2 and part of its fine pores 3 may be coated with the graft polymer.

Homopolymers by-produced in the process of the plasma graft polymerization can be completely washed away with solvents such as toluene, etc. leaving only the graft polymer on the surface of the microporous polyethylene membrane (inner surfaces of fine pores and surface of membrane).

[D] Plasma Graft Polymerization

The plasma graft polymerization of the water-insoluble monomer onto the microporous polyethylene membrane is conducted as follows:

(a) The water-insoluble monomer to be graft-polymerized is first dissolved or dispersed in an inorganic or organic solvent to form a uniform solution, dispersion or emulsion of the water-insoluble monomer. In general, though an aqueous solution of a graft-polymerizable monomer is preferable in the plasma graft polymerization, the monomer used in the present invention is insoluble in water. Accordingly, an emulsion of the water-insoluble monomer is prepared by adding the water-insoluble monomer to water in the process of the present invention. In this case, a surface-active agent is added to make the emulsion more uniform. In the preparation of the emulsion, 0.1-100 parts by weight of a water-insoluble monomer is preferably added to 100 parts by weight of water containing 0.1-50 % by weight of a surface-active agent. The resulting mixture is then stirred by ultrasonic vibration so that the water-insoluble monomer is uniformly dispersed in water. When the amount of the surface-active agent is less than 0.1 % by weight, a good emulsion cannot be obtained. On the other hand, when it exceeds 50 % by weight, the graft polymerization is likely to be hindered.

When the amount of the water-insoluble monomer is less than 0.1 parts by weight per 100 parts by weight of water containing a surface-active agent, a sufficient amount of a graft polymer cannot be formed in the fine pores of the microporous membrane. On the other hand, when the amount of the water-insoluble monomer exceeds 100 parts by weight, it is difficult to control the degree of polymerization, resulting in the formation of the graft polymer of the water-insoluble monomer even in unnecessary surface portions of the membrane.

(b) Plasma is usually generated in a gas such as argon, helium, nitrogen, air, etc. under a pressure of $10^{-2}$-10 mbar at a frequency of 10-30 MHz and at an output power of 1-1000 W for 1-1000 s to form radicals on the surface (including inner surfaces of fine pores) of the microporous polyethylene membrane. The microporous polyethylene membrane formed with radicals is then brought into contact with the emulsion. Specifically, the microporous polyethylene membrane formed with radicals is preferably immersed in the above emulsion. Incidentally, this operation is preferably conducted at 20-100 °C for 1 minute to several days while bubbling a nitrogen gas, an argon gas, etc.

(c) Next, the coated microporous polyethylene membrane is washed with toluene, xylene, etc. for about 1 hour and then dried.

By the above-described plasma graft polymerization, the desired separation membrane composed of a microporous polyethylene membrane whose fine pores are substantially filled with the graft polymer can be obtained. Since the plasma graft polymerization takes place only on the surface of the microporous polyethylene membrane, the membrane itself is not deteriorated. Also, since the graft polymer is chemically bonded to the membrane itself, its bonding strength is not deteriorated as the time passes.

In the separation membrane of the present invention, the fine pores of the microporous polyethylene membrane should be substantially filled with the graft polymer. The graft polymer filling the fine pores selectively absorbs particular components in a liquid mixture, such that they can pass through the graft polymer in the fine pores to the opposite side of the separation membrane. If the porosity of the microporous polyethylene membrane is made higher, the amounts of the substances which can pass through the graft polymer in the fine pores can be increased, thereby improving the separation efficiency. Since the swelling of the graft polymer is suppressed by the microporous polyethylene membrane, the strength of the overall membrane is not decreased.

[E] Separation Process

According to the present invention, the separation of an organic compound dissolved in water can be conducted with the separation membrane of the present invention by using a pervaporation method, a vapor permeation method, or a reverse osmosis method. These pervaporation method, vapor permeation method and reverse osmosis method may be the same as those known in the art. A liquid or gas mixture (water or steam containing an organic compound to be separated) is supplied to a primary side of the separation membrane of the present invention, while one component (organic compound) separated from the liquid or gas mixture is withdrawn from the separation membrane to a secondary side (a low-pressure side).

the temperature at which the separation process of the present invention is conducted may vary to some extent depending on a substance to be separated, but it is generally 0-120 °C, and preferably 10-100 °C. When the separation temperature exceeds 120 °C, the microporous polyethylene membrane cannot keep its shape. On the other hand, when the separation temperature is lower than 0 °C, only a small amount of a substance can pass through the separation membrane per a unit area, a unit thickness and unit time, though such amount may be slightly changed depending on the type of a substance to be separated.

The pressure under which the separation process of the present invention is conducted is generally 200 $kg/cm^2$ or less, and more preferably 100 $kg/cm^2$ or less. Under a pressure exceeding 200 $kg/cm^2$ the microporous polyethylene membrane cannot keep its shape.

When the water-insoluble monomer grafted to the microporous polyethylene membrane is ethyl acrylate or butyl acrylate, good separation can be achieved for organic halides such as chloroform, carbon tetrachloride, trichloroethylene, tetrachloroethylene, 1,1,1-trichloroethane, methylenechloride, etc. dissolved in water according to the process of the present invention. In addition, organic compounds such as dimethyl formamide, dimethyl sulfoxide, acetone, tetrahydrofuran, etc. can be separated.

The present invention will be described in further detail by way of the following Examples.

**Examples 1 and 2, Reference Example 1**

A microporous, ultra-high-molecular weight polyethylene membrane having a weight-average molecular weight of $2 \times 10^6$, a thickness of 6 $\mu$m, a porosity of 46%, an average pore diameter of 0.02 $\mu$m and a rupture strength of 1300 $kg/cm^2$ (manufactured by Tonen Chemical Corporation, molecular weight fraction: 200,000) was irradiated with plasma using a plasma generator (manufactured by Samuco K. K.). The plasma irradiation conditions are shown in Table 1.

Table 1

| | |
|---|---|
| High-frequency Output: | 10 W, |
| Plasma irradiation time: | 60 seconds, |
| Atmosphere: | Argon gas, and |
| Pressure: | 0.1 mbar. |

Sodium dodecylbenzene sulfonate (SDS), ethyl acrylate (EA in Example 1) and butyl acrylate (BA in Example 2) were added to water as shown in Table 2, and subjected to ultrasonic vibration to form an emulsion. Also, as Reference Example 1, an emulsion of methyl acrylate (MA) in water was prepared. Incidentally, methyl acrylate is relatively soluble in water.

Each microporous polyethylene membrane subjected to a plasma treatment was immersed in an emulsion of EA (Example 1), and in an emulsion of BA (Example 2) to carry out graft polymerization. The graft polymerization conditions (temperature and time) are shown in Table 2. Similarly, a microporous polyethylene membrane subjected to a plasma treatment was immersed in an emulsion of MA (Reference Example 1) to carry out the graft polymerization of MA.

Table 2

| | Example 1 | Example 2 | Ref. Example 1 |
|---|---|---|---|
| Monomer | EA | BA | MA |
| Conc. of Monomer[1] | 5.0 | 10.0 | 3.0 |
| Conc. of SDS[2] | 30 | 100 | - |
| Temp. (°C) | 30 | 30 | 30 |
| Time (min) | 30-90 | 30-180 | 10-30 |

Note:
(1) Unit is % by weight, showing the amount (% by weight) of monomer added to 100 % by weight of water containing SDS.
(2) Unit is g/liter, showing the amount (gram) of SDS added to 1 liter of water.

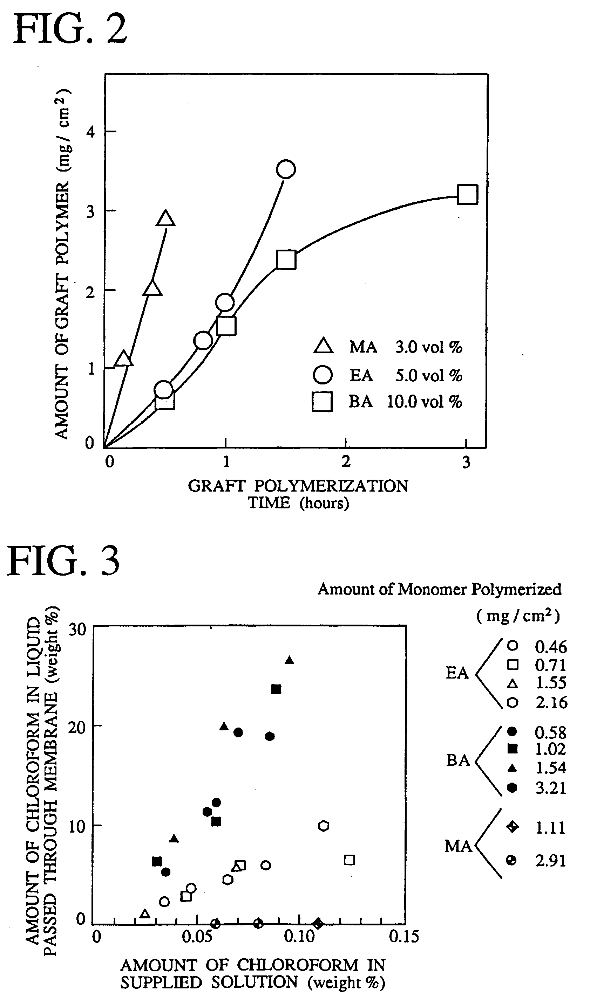

After immersion in water, the microporous polyethylene membrane was washed with toluene over night and dried at room temperature. After that, the weight of the membrane was measured, and its difference from the initial weight was calculated to determine the amount of the resulting graft polymer. The results are shown in Fig. 2.

As is clear from Fig. 2, the amount of the graft polymer generated per unit time is largest in the case of MA followed by EA and BA. Even in the case of BA, a sufficient amount of a graft polymer for a separation membrane can be formed in the fine pores of the microporous polyethylene membrane for about 2 hours.

Any of the resulting membranes was transparent after graft polymerization reaction. Thus, it has been confirmed that the fine pores of the microporous polyethylene membrane were filled with the graft polymer. Also, the analysis of the graft polymer-formed microporous polyethylene membrane by transmission-type and all reflection-type Fourier transform IR spectroscopy methods and the comparison of the composition of the overall membrane with a surface composition of the membrane have revealed that any of EA, BA and MA was graft-polymerized in the fine pores of the membrane.

With each of the resulting separation membranes, an aqueous solution of 0.1-0.3 % by weight of chloroform was subjected to a separation test by a pervaporation method. The amount of chloroform in a supplied solution and the amount of chloroform in a liquid which passed through the separation membrane were measured. In this measurement, chloroform was extracted from the supplied solution and from the liquid which passed through the separation membrane, and the amount of chloroform in each extract was measured by a gas chromatograph (FID detector). The relation of the concentration of chloroform in the supplied solution and the concentration of chloroform in the liquid which passed through the separation membrane are shown in Fig. 3.

As is clear from Fig. 3, the MA-grafted separation membrane showed water permeability, while the EA-grafted separation membrane (Example 1) concentrated the 0.12-%-by-weight chloroform solution to 9.86 % by weight. Also, in the case of the BA-grafted separation membrane (Example 2), the 0.11-%-by-weight chloroform solution was concentrated to 33.1 % by weight.

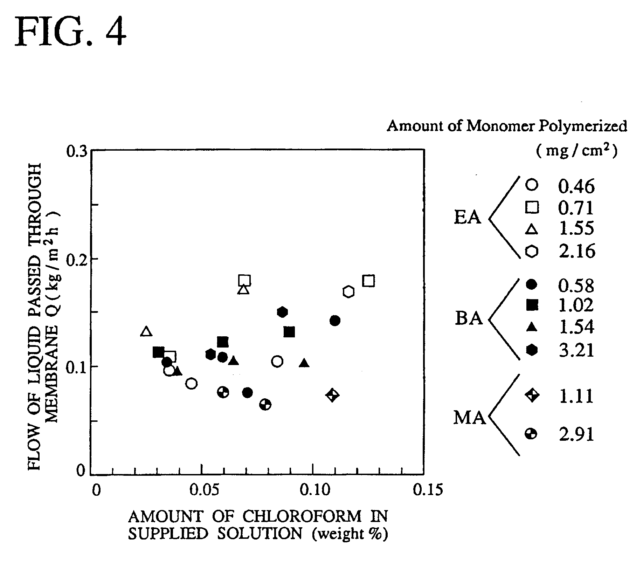

The flow (Q) of the liquid passing through the separation membrane was evaluated as a weight of such liquid per unit time and unit area ($kg/m^2 \cdot h$). Fig. 4 shows the relation between the concentration of chloroform in the supplied solution and the flow (Q) of a liquid passed through the separation membrane.

As is clear from Fig. 4, the EA-grafted separation membrane (Example 1) and the BA-grafted separation membrane (Example 2) show a larger liquid flow (Q) than the MA-grafted separation membrane (Reference Example 1).

As described above in detail, the separation membrane of the present invention is composed of a microporous polyethylene membrane showing a good resistance to swelling due to the absorption of water and an organic solvent. Particularly in the case of using a high-density polyethylene or ultra-high-molecular-weight polyethylene, the separation membrane has excellent mechanical strength and durability. Thus, it can perform good separation repeatedly.

Since the separation membrane of the present invention has a graft polymer of a water-insoluble monomer substantially filling the fine pores of the microporous polyethylene membrane, high selectivity of separation can be achieved for a substance having good affinity for the graft polymer, by using a pervaporation method, a vapor permeation method, or a reverse osmosis method. Accordingly, when ethyl acrylate or butyl acrylate is used as a water-insoluble monomer, organic halides having small carbon numbers such as chloroform, etc. can be separated at a high selectivity.

The separation membrane of the present invention can be produced by forming a uniform, aqueous emulsion containing a water-insoluble monomer and a surface-active agent, and performing the plasma graft polymerization of the water-insoluble monomer onto the microporous polyethylene membrane. Thus, the microporous polyethylene membrane is uniformly covered with the graft polymer, showing a high separation capability.

## Claims

1.  A separation membrane comprising a microporous polyethylene membrane having fine pores substantially filled with a graft polymer obtained by the plasma graft polymerization of a water-insoluble monomer.

2.  The separation membrane according to claim 1, wherein said water-insoluble monomer has affinity for an organic compound.

3.  The separation membrane according to claim 1, wherein said water-insoluble monomer has affinity for an organic halide.

4.  The separation membrane according to any one of claims 1-3, wherein said water-insoluble monomer is a water-insoluble acrylic monomer.

5. The separation membrane according to claim 4, wherein said water-insoluble acrylic monomer is ethyl acrylate or butyl acrylate.

6. A process for preparing a separation membrane according to claim 1 comprising:
(a) adding a water-insoluble monomer and a surface-active agent to water to prepare a uniform emulsion of said water-insoluble monomer; and
(b) bringing a microporous polyethylene membrane having radicals formed by plasma irradiation into contact with said emulsion, thereby substantially filling the fine pores of said microporous polyethylene membrane with the resulting graft polymer of said water-insoluble monomer.

7. The process for preparing the separation membrane according to claim 6, wherein said emulsion is prepared by adding 0.1-100 parts by weight of said water-insoluble monomer to 100 parts by weight of water containing 0.1-50% by weight of said surface-active agent.

8. The process for preparing the separation membrane according to claim 6 or 7, wherein sodium dodecylbenzene sulfonate is used as said surface-active agent.

9. A process for separating an organic compound dissolved in water, comprising using a separation membrane comprising a microporous polyethylene membrane having fine pores substantially filled with a graft polymer obtained by the plasma graft polymerization of a water-insoluble monomer, said organic compound having affinity for said graft polymer of a water-insoluble monomer; and conducting a pervaporation method, a vapor permeation method or a reverse osmosis method with said separation membrane to selectively separate said organic compound dissolved in water.

10. The process of separation according to claim 9, wherein said graft polymer filling the fine pores is polyethyl acrylate or polybutyl acrylate for selectively separating an organic halide dissolved in water.

**Patentansprüche**

1. Trennmembran, umfassend eine mikroporöse Polyethylenmembran mit feinen Poren, die im Wesentlichen mit einem Pfropfpolymer gefüllt sind, erhalten durch Plasmapfropfpolymerisation eines wasserunlöslichen Monomers.

2. Trennmembran nach Anspruch 1, wobei das wasserunlösliche Monomer eine Affinität für eine organische Verbindung aufweist.

3. Trennmembran nach Anspruch 1, wobei das wasserunlösliche Monomer eine Affinität für ein organisches Halogenid aufweist.

4. Trennmembran nach einem der Ansprüche 1 bis 3, wobei das wasserunlösliche Monomer ein wasserunlösliches Acrylmonomer ist.

5. Trennmembran nach Anspruch 4, wobei das wasserunlösliche Acrylmonomer Ethylacrylat oder Butylacrylat ist.

6. Verfahren zur Herstellung einer Trennmembran nach Anspruch 1, umfassend:
(a) Zugabe eines wasserunlöslichen Monomers und eines Tensids zu Wasser unter Herstellung einer gleichförmigen Emulsion des wasserunlöslichen Monomers und
(b) Inkontaktbringen einer mikroporösen Polyethylenmembran, die durch Plasmabestrahlung gebildete Radikale aufweist, mit der Emulsion, wodurch die feinen Poren der mikroporösen Polyethylenmembran mit dem sich ergebenden Pfropfpolymer des wasserunlöslichen Monomers gefüllt werden.

7. Verfahren zur Herstellung einer Trennmembran nach Anspruch 6, wobei die Emulsion durch Zugabe von 0,1 bis 100 Gewichtsteilen des wasserunlöslichen Monomers zu 100 Gewichtsteilen Wasser, enthaltend 0,1 bis 50 Gew.-% des Tensids, hergestellt wird.

8. Verfahren zur Herstellung der Trennmembran nach Anspruch 6 oder 7, wobei Natriumdodecylbenzolsulfonat als Tensid verwendet wird.

**9.** Verfahren zur Trennung einer in Wasser gelösten organischen Verbindung, umfassend Verwendung einer Trennmembran, die eine mikroporöse Polyethylenmembran mit feinen Poren umfaßt, die im wesentlichen mit einem Pfropfpolymer gefüllt sind, erhalten durch Plasmapfropfpolymerisation eines wasserunlöslichen Monomers, wobei die organische Verbindung eine Affinität für das Pfropfpolymer eines wasserunlöslichen Monomers aufweist, und Ausführen eines Pervaporationsverfahrens, eines Dampfpermeationsverfahrens oder eines Umkehrosmoseverfahrens mit der Trennmembran zur selektiven Trennung der in Wasser gelösten organischen Verbindung.

**10.** Trennverfahren nach Anspruch 9, wobei das die feinen Poren füllende Pfropfpolymer zur selektiven Trennung eines in Wasser gelösten organischen Halogenids Polyethylacrylat oder Polybutylacrylat ist.

## Revendications

**1.** Membrane de séparation comprenant une membrane microporeuse en polyéthylène comportant des pores fins pratiquement remplis d'un polymère greffé obtenu par la polymérisation greffage à l'aide d'un plasma d'un monomère insoluble dans l'eau.

**2.** Membrane de séparation selon la revendication 1, dans laquelle ledit monomère insoluble dans l'eau possède une affinité pour un composé organique.

**3.** Membrane de séparation selon la revendication 1, dans laquelle ledit monomère insoluble dans l'eau possède une affinité pour un halogénure organique.

**4.** Membrane de séparation selon une quelconque des revendications 1 à 3, dans laquelle ledit monomère insoluble dans l'eau est un monomère acrylique insoluble dans l'eau.

**5.** Membrane de séparation selon la revendication 4, dans laquelle ledit monomère acrylique insoluble dans l'eau est l'acrylate d'éthyle ou l'acrylate de butyle.

**6.** Procédé de fabrication d'une membrane de séparation selon la revendication 1, qui comprend :
(a) l'addition d'un monomère insoluble dans l'eau et d'un agent tensioactif à de l'eau, afin de préparer une émulsion homogène dudit monomère insoluble dans l'eau ; et
(b) la mise en contact avec ladite émulsion d'une membrane de polyéthylène microporeuse comportant des radicaux libres formés par irradiation à l'aide d'un plasma, ce qui permet de pratiquement remplir les pores fins de ladite membrane microporeuse en polyéthylène avec le polymère greffé résultant dudit monomère insoluble dans l'eau.

**7.** Procédé de fabrication de la membrane de séparation selon la revendication 6, dans lequel on prépare ladite émulsion par addition de 0,1 à 100 partie(s) en poids dudit monomère insoluble dans l'eau dans 100 parties en poids d'eau contenant 0,1 à 50 % en poids dudit agent tensioactif.

**8.** Procédé de fabrication de la membrane de séparation selon la revendication 6 ou 7, dans lequel on utilise du dodécylbenzènesulfonate de sodium comme agent tensioactif.

**9.** Procédé de séparation d'un composé organique dissous dans de l'eau, qui comprend la mise en oeuvre d'une membrane séparatrice à base d'une membrane de polyéthylène microporeuse comportant des pores fins pratiquement remplis d'un polymère greffé obtenu par polymérisation greffage à l'aide d'un plasma d'un monomère insoluble dans l'eau, ledit composé organique présentant une affinité pour ledit polymère greffé d'un monomère insoluble dans l'eau, et la mise en oeuvre avec ladite membrane de séparation d'un procédé d'évaporation à travers une membrane, d'un procédé de perméation de vapeur ou d'un procédé d'osmose inverse, afin de séparer sélectivement ledit composé or organique dissous dans l'eau.

**10.** Procédé de séparation selon la revendication 9, dans lequel ledit polymère greffé remplissant les pores fins est du poly(acrylate d'éthyle) ou du poly(acrylate de butyle), pour la séparation sélective d'un halogénure organique dissous dans de l'eau.

# FIG. 1

(a)

(b)

## FIG. 2

## FIG. 3

# FIG. 4

Amount of Monomer Polymerized

$( mg / cm^2 )$

FLOW OF LIQUID PASSED THROUGH MEMBRANE Q $( kg / m^2 h )$

AMOUNT OF CHLOROFORM IN SUPPLIED SOLUTION (weight %)

EA
○  0.46
□  0.71
△  1.55
⬠  2.16

BA
●  0.58
■  1.02
▲  1.54
⬡  3.21

MA
◈  1.11
⊕  2.91